# EUROPEAN PATENT APPLICATION

(11) **EP 4 773 007 A1**
(43) Date of publication of application: **08.07.2026**
(21) Application number: 25757732.0
(22) Date of filing: 19.02.2025
(51) Int. Cl.: G06F 9/50

(54) **IN-PROCESS RESOURCE CONTROL METHOD AND APPARATUS, AND DEVICE AND STORAGE MEDIUM**

(30) Priority: 23.02.2024 CN 202410200024
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: DOU, Ping, Hangzhou Bay New District, Ningbo, Zhejiang 315336 (CN); FU, Zhaohui, Hangzhou Bay New District, Ningbo, Zhejiang 315336 (CN); HAN, Yong, Hangzhou Bay New District, Ningbo, Zhejiang 315336 (CN); LU, Zhe, Hangzhou Bay New District, Ningbo, Zhejiang 315336 (CN)
(74) Representative: Boult Wade Tennant LLP
(86) International application number: PCT/CN2025/077972
(87) International publication number: WO 2025/176140

(57) **Abstract**

The present application provides an in-process resource control method and apparatus, a device and a storage medium, which can be applied to the field of computers. The method includes: acquiring at least one to-be-processed task and respective task attribute information, where the task attribute information includes a task execution type, and the task execution type is serial execution or parallel execution; determining corresponding threads for executing respective tasks according to the respective task attribute information, where the thread is created by a process and located in a first resource pool or a second resource pool, the first resource pool is a resource pool for threads corresponding to serial processing tasks, the second resource pool is a resource pool for threads corresponding to parallel processing tasks, and the number of threads in the first resource pool and the second resource pool is pre-configured; allocating the respective tasks to task queues of the corresponding threads; and adopting corresponding threads to sequentially execute tasks in corresponding task queues. The present application improves an accuracy of resource control precision and reduces software maintenance costs.

## Description

This application claims priority of Chinese patent application No. 202410200024.5, filed with the China National Intellectual Property Administration on February 23, 2024 and entitled "IN-PROCESS RESOURCE CONTROL METHOD AND APPARATUS, DEVICE AND STORAGE MEDIUM", the entire contents of which are incorporated by reference in the present application.

### TECHNICAL FIELD

The present application relates to, but is not limited to, the field of computers, and in particular, to an in-process resource control method and apparatus, a device and a storage medium.

### BACKGROUND

Middleware can run in different systems or chips. However, the number of CPUs and computing power for different chips often vary greatly. Therefore, the same set of middleware often exhibits different performances when running in different chips.

In order to enable the middleware to exhibit good performance on these different chips, it is generally solved by applying different software versions. However, different software versions adopt different resource control strategies, resulting in high software maintenance costs; and when the different resource control strategies are adopted, resource control is generally performed at process granularity, leading to inaccurate resource control precision.

### SUMMARY

The following is a summary of subject matters described in detail herein. This summary is not intended to limit the protection scope of the claims.

The present application provides an in-process resource control method and apparatus, a device and a storage medium, which can avoid adopting different resource control strategies for different software versions, thereby avoiding high software maintenance costs; and it can also avoid performing resource control at process granularity when adopting different resource control strategies, thus avoiding inaccurate resource control precision.

**In** a first aspect, the present application provides an in-process resource control method, including:
acquiring at least one to-be-processed task and respective task attribute information, where the task attribute information includes a task execution type, and the task execution type is serial execution or parallel execution;
determining corresponding threads for executing respective tasks according to the respective task attribute information, where a thread is created by a process and located in a first resource pool or a second resource pool, the first resource pool is a resource pool for threads corresponding to serial processing tasks, the second resource pool is a resource pool for threads corresponding to parallel processing tasks, and the number of threads in the first resource pool and the second resource pool is pre-configured;
allocating the respective tasks to task queues of the corresponding threads;
adopting corresponding threads to sequentially execute tasks in corresponding task queues.

In a possible design, the determining the corresponding threads for executing the respective tasks according to the respective task attribute information includes:
in response to the task execution type corresponding to any task being the serial execution, determining threads in the first resource pool as first candidate threads corresponding to the task, and determining a corresponding thread for executing the task from the first candidate threads according to a first thread selection strategy;
in response to the task execution type corresponding to any task being the parallel execution, determining threads in the second resource pool as second candidate threads corresponding to the task, and determining a corresponding thread for executing the task from the second candidate threads according to a second thread selection strategy.

In a possible design, the task attribute information further includes a task type and a task load weight;
the determining the corresponding thread for executing the task from the first candidate threads according to the first thread selection strategy includes:
determining whether there is a task of the same type as the task in task queues corresponding to the first candidate threads according to the task type;
if so, determining a first candidate thread to which a task queue corresponding to the task of the same type as the task belongs as the corresponding thread for executing the task;
if not, determining a first target task queue with the minimum number of included task types or the minimum total task load weight corresponding to included tasks from the task queues corresponding to the first candidate threads, and determining a first candidate thread to which the first target task queue belongs as the corresponding thread for executing the task.

In a possible design, the determining the corresponding thread for executing the task from the second candidate threads according to the second thread selection strategy includes:
determining a second target task queue with the minimum number of included to-be-executed tasks or the minimum total task load weight corresponding to included tasks from the task queues corresponding to respective second candidate threads;
determining a second candidate thread to which the second target task queue belongs as the corresponding thread for executing the task.

In a possible design, the method further includes:
monitoring execution states of respective threads according to a first preset cycle;
in response to an execution state of any thread being an abnormal state, determining a thread to receive tasks, and transferring tasks in a task queue corresponding to an abnormal thread to a task queue corresponding to the thread to receive tasks;
deleting the abnormal thread.

In a possible design, the monitoring the execution states of the respective threads according to the first preset cycle includes:
receiving heartbeat information sent by the respective threads according to a second preset cycle, where the heartbeat information includes a thread identifier;
in response to determining, according to the thread identifier, that the heartbeat information sent by any thread is received within the first preset cycle, determining that the execution state of the thread is normal;
in response to determining, according to the thread identifier, that the heartbeat information sent by any thread is not received within the first preset cycle, determining that the execution state of the thread is abnormal.

In a possible design, the method further includes:
determining the number of threads in a corresponding resource pool according to a third preset cycle;
in response to the number of threads being less than a pre-configured number of threads, creating a new thread in a corresponding resource pool, to enable the total number of threads in the corresponding resource pool after creating the thread to be equal to the pre-configured number of threads.

In a second aspect, the present application provides an in-process resource control apparatus, including:
an acquisition module, configured to acquire at least one to-be-processed task and respective task attribute information, where the task attribute information includes a task execution type, and the task execution type is serial execution or parallel execution;
a determination module, configured to determine corresponding threads for executing respective tasks according to the respective task attribute information, where a thread is created by a process and located in a first resource pool or a second resource pool, the first resource pool is a resource pool for threads corresponding to serial processing tasks, the second resource pool is a resource pool for threads corresponding to parallel processing tasks, and the number of threads in the first resource pool and the second resource pool is pre-configured;
an allocation module, configured to allocate the respective tasks to task queues of the corresponding threads;
an execution module, configured to adopt corresponding threads to sequentially execute tasks in corresponding task queues.

In a third aspect, the present application provides an electronic device, including a processor and a memory connected to the processor in a communication way;
the memory stores computer-executable instructions;
the processor executes the computer-executable instructions stored in the memory to implement the method according to any one of the first aspect.

In a fourth aspect, the present application provides a computer-readable storage medium, where the computer-readable storage medium stores computer-executable instructions which, when executed by a processor, implement the method according to any one of the first aspect.

In a fifth aspect, the present application provides a vehicle, including the electronic device according to the third aspect.

In a sixth aspect, the present application provides a computer program product, including a computer program which, when executed by a processor, implements the method according to any one of the first aspect.

In a seventh aspect, the present application provides a computer program, including program codes, when the computer program is executed by a processor, the program codes are used to implement the method according to any one of the first aspect.

In the in-process resource control method and apparatus, the device and the storage medium provided by the present application, at least one to-be-processed task and respective task attribute information are acquired, where the task attribute information includes a task execution type, and the task execution type is serial execution or parallel execution; corresponding threads for executing the respective tasks are determined according to the respective task attribute information, where the thread is created by a process and located in a first resource pool or a second resource pool, the first resource pool is a resource pool for threads corresponding to serial processing tasks, the second resource pool is a resource pool for threads corresponding to parallel processing tasks, and the number of threads in the first resource pool and the second resource pool is pre-configured; the respective tasks are allocated to task queues of the corresponding threads; and corresponding threads are adopted to sequentially execute tasks in corresponding task queues. By processing serial tasks with the threads in the first resource pool and allocating the serial tasks to the task queues of the corresponding threads, and by processing parallel tasks with the threads in the second resource pool and allocating the parallel tasks to the task queues of the corresponding threads, the serial tasks and parallel tasks can be executed in a certain order, thereby avoiding a problem of failed task execution caused by sequence disorder during task execution, and ensuring an accuracy of the task execution. In this solution, the number of threads in the first resource pool and the second resource pool is pre-configured, and the number of threads would be kept at a fixed number, thus computing power requirements are consistent for different chips. Therefore, the same set of middleware can run stably in chips with different computing power, reducing software maintenance costs. Meanwhile, this solution performs resource control at the thread granularity, improving the accuracy of resource control precision.

Other aspects can be understood after reading and understanding accompanying drawings and detailed description.

### BRIEF DESCRIPTION OF DRAWINGS

Accompanying drawings herein are incorporated into the specification and form a part of the specification, illustrate embodiments consistent with the present application, and explain principles of the present application together with the specification.
FIG. 1 is an application scenario diagram of an in-process resource control method provided by an embodiment of the present application.
FIG. 2 is a flowchart of an in-process resource control method provided by an embodiment of the present application.
FIG. 3 is a flowchart of an in-process resource control method provided by another embodiment of the present application.
FIG. 4 is a flowchart of an in-process resource control method provided by yet another embodiment of the present application.
FIG. 5 is a schematic diagram of a business process structure framework provided by an embodiment of the present application.
FIG. 6 is a schematic structural diagram of an in-process resource control apparatus provided by an embodiment of the present application.
FIG. 7 is a schematic structural diagram of an electronic device provided by an embodiment of the present application.

Through the above accompanying drawings, the specific embodiments of the present application have been clearly shown, which will be described in more detail below. These accompanying drawings and written descriptions are not intended to limit scope of inventive concept of the present application in any way, but to explain the concepts of the present application to those skilled in the art by referring to specific embodiments.

### DESCRIPTION OF EMBODIMENTS

Exemplary embodiments will be described in detail herein, examples of which are shown in the accompanying drawings. When the following description refers to the accompanying drawings, the same numerals in different accompanying drawings represent the same or similar elements unless otherwise indicated. Implementations described in the following exemplary embodiments do not represent all implementations consistent with the present application. On the contrary, they are only examples of apparatuses and methods consistent with some aspects of the present application as detailed in the appended claims.

To clearly understand technical solutions of the present application, the solution of the prior art is first introduced in detail.

Middleware is generally a set of general systems that can run in different systems or different chips. However, for different services, the number of CPUs and computing power of chips often vary greatly. For example, with respect to a chip for intelligent driving, the number of CPU cores of which can be more than a dozen; while with respect to some gateway chips, the CPU of which is only single-core or dual-core. Therefore, when one set of middleware runs in these above two chips, different resource usage strategies need to be adopted; when running in a high-computing-power chip, more threads can be created to process tasks to achieve higher performance; and when running in a low-computing-power chip, such strategy will result in large task scheduling overhead and affect performance due to an excessive number of threads and few CPUs. At present, in order to enabling the middleware to exhibit good performance on different chips, it is generally solved by applying different software versions. While different software versions adopts different resource control strategies, resulting in high software maintenance costs; and when the different resource control strategies are adopted, resource control is generally performed at process granularity, leading to inaccurate resource control precision.

Based on this, to avoid adopting different resource control strategies for different software versions and thus avoid high software maintenance costs, resource control and task scheduling can be implemented inside one single process. For the process, the number of threads in a first resource pool and a second resource pool is pre-configured, and tasks are allocated to task queues of corresponding threads based on task execution types, and the tasks in the corresponding task queues are sequentially executed by the corresponding threads. Since the number of threads corresponding to this process is kept at a fixed number, computing power requirements are consistent for different chips. Therefore, the same set of software can run stably in chips with different computing power. To avoid performing resource control at process granularity when adopting different resource control strategies and thus avoid inaccurate resource control precision, the control can be performed at a thread granularity to improve an accuracy of resource control precision.

An application scenario of an embodiment of the present application is introduced below.

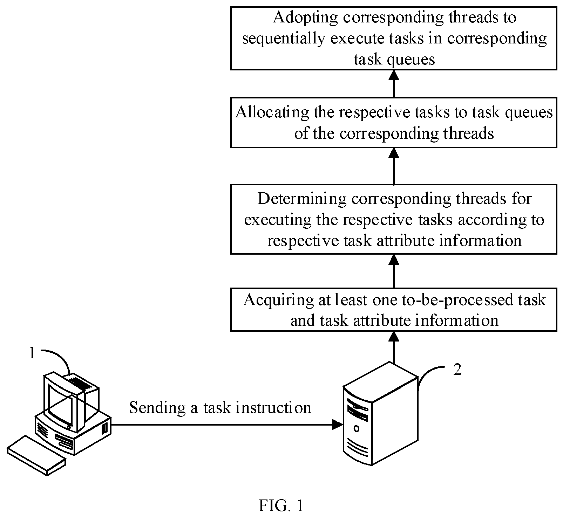

FIG. 1 is an application scenario diagram of an in-process resource control method provided by an embodiment of the present application. As shown in FIG. 1, illustratively, the specific application scenario of the present application may be a scenario of resource control when middleware runs in a chip for intelligent driving. A system corresponding to the in-process resource control method provided by the present application includes an electronic device corresponding to in-process resource control, such as a vehicle-mounted terminal. The vehicle-mounted terminal includes a user operation interface 1 and an intelligent driving chip 2. A user sends a task instruction to the intelligent driving chip 2 by clicking the user operation interface 1 of the vehicle-mounted terminal, or the intelligent driving chip 2 automatically triggers a task instruction through a sensor or other means in the vehicle-mounted terminal. The task instruction includes to-be-processed tasks and task attribute information. The intelligent driving chip creates a different number of threads and determines corresponding threads for executing respective tasks according to respective task attribute information, a first resource pool is used to process serial tasks, a second resource pool is used to process parallel tasks, respective tasks are allocated to a task queue of a corresponding thread, and the tasks in the corresponding task queue are sequentially executed by the corresponding thread.

It can be understood that the application scenario of the in-process resource control method provided in this embodiment may also be other application scenarios, and corresponding chips may also be other types of chips, such as a chip in a gateway device, which is not limited in this embodiment.

Technical solutions of the present application are described in detail below with specific embodiments. The following specific embodiments can be combined with each other, and the same or similar concepts or processes may not be repeated in some embodiments. The embodiments of the present application will be described below with reference to the accompanying drawings.

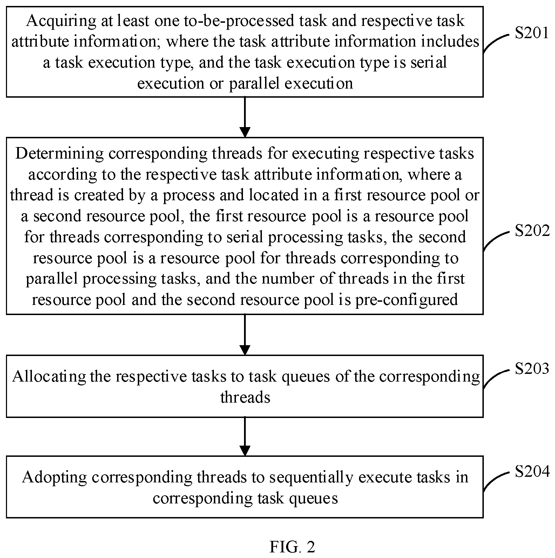

FIG. 2 is a flowchart of an in-process resource control method provided by an embodiment of the present application. As shown in FIG. 2, an executive subject of this embodiment is an in-process resource control apparatus, which is located in an electronic device, and the electronic device may be a vehicle-mounted terminal. The in-process resource control method provided in this embodiment includes the following steps.

Step 201: acquiring at least one to-be-processed task and respective task attribute information; where the task attribute information includes a task execution type, and the task execution type is serial execution or parallel execution.

The task attribute information refers to attribute information corresponding to the to-be-processed tasks, which may include a task type and the task execution type, where the task execution type is the serial execution or the parallel execution.

The serial execution means that there is an association between tasks, and one task needs to be executed after another task is completed.

The parallel execution means that tasks do not need to be executed in sequence and can be executed simultaneously.

Specifically, in this embodiment, a user sends a task instruction to the electronic device by clicking an user operation interface of the vehicle-mounted terminal, or the electronic device automatically triggers a task instruction through a sensor or other means in the vehicle-mounted terminal, and the task instruction includes the to-be-processed tasks and task attribute information, so the electronic device can acquire the to-be-processed tasks and task attribute information.

Step 202: determining corresponding threads for executing respective tasks according to the respective task attribute information, where a thread is created by a process and located in a first resource pool or a second resource pool, the first resource pool is a resource pool for threads corresponding to serial processing tasks, the second resource pool is a resource pool for threads corresponding to parallel processing tasks, and the number of threads in the first resource pool and the second resource pool is pre-configured.

The first resource pool is a resource pool for storing threads whose task execution types are the serial execution.

The second resource pool is a resource pool for storing threads whose task execution types are the parallel execution.

Specifically, in this embodiment, the user can configure the number of threads in the first resource pool and the second resource pool, and the electronic device creates a corresponding number of threads in the first resource pool and the second resource pool according to the number of threads in the first resource pool and the second resource pool that is pre-configured by the user. Based on the acquired tasks and task attribute information, it is judged whether a task is the serial execution or parallel execution; if the task execution type is the serial execution, the task will be allocated to the first resource pool; and if the task execution type is the parallel execution, the task will be allocated to the second resource pool.

Step 203: allocating the respective tasks to task queues of the corresponding threads.

The task queue is used to cache to-be-processed tasks.

Specifically, in this embodiment, one thread corresponds to one task queue, and the electronic device allocates tasks to the task queues of the corresponding threads based on the task execution type. If the task execution type is the serial execution, the task will be allocated to the task queues of the corresponding threads in the first resource pool; and if the task execution type is the parallel execution, the task will be allocated to the task queues of the corresponding threads in the second resource pool. Specifically, the task can be stored at the top of the task queue of the corresponding thread, and this task can be executed after the previously stored task has been completed.

Step 204: adopting corresponding threads to sequentially execute tasks in corresponding task queues.

Specifically, in this embodiment, the corresponding threads in the first resource pool and the second resource pool sequentially execute the tasks in the corresponding task queues, and the tasks in the task queues are executed in a first-in first-out manner. When a task queue is not empty, the first task in the task queue is taken for processing; and when there is no task in the task queue, the thread is suspended and enters a non-executable state, and the thread no longer occupies CPU resources at this time.

In the in-process resource control method provided by this embodiment, at least one to-be-processed task and respective task attribute information are acquired, where the task attribute information includes a task execution type, and the task execution type is the serial execution or the parallel execution; the corresponding threads for executing respective tasks are determined according to the respective task attribute information, where the thread is created by the process and located in the first resource pool or the second resource pool, the first resource pool is the resource pool is a resource pool for threads corresponding to the serial processing tasks, the second resource pool is the resource pool for threads corresponding to the parallel processing tasks, and the number of threads in the first resource pool and the second resource pool is pre-configured; the respective tasks are allocated to task queues of the corresponding threads; and adopts the corresponding threads are adopted to sequentially execute the tasks in the corresponding task queues. By processing serial tasks with the threads in the first resource pool and allocating the serial tasks to the task queues of the corresponding threads, and by processing parallel tasks with the threads in the second resource pool and allocating the parallel tasks to the task queues of the corresponding threads, the serial tasks and parallel tasks can be executed in a certain order, thereby avoiding a problem of failed task execution caused by sequence disorder during task execution, and ensuring an accuracy of the task execution. In this solution, the number of threads in the first resource pool and the second resource pool is pre-configured, and the number of threads would be kept at a fixed number, thus computing power requirements are consistent for different chips. Therefore, the same set of middleware can run stably in chips with different computing power, reducing software maintenance costs. Meanwhile, this solution performs resource control at the thread granularity, improving the accuracy of resource control precision.

As an optional implementation, in this embodiment, Step 202 includes the following steps.

Step 2021: in response to the task execution type corresponding to any task being the serial execution, determining threads in the first resource pool as first candidate threads corresponding to this task, and determining a corresponding thread for executing this task from the first candidate threads according to a first thread selection strategy.

The first candidate threads refer to candidate threads in the first resource pool for processing tasks whose task execution type is the serial execution.

The first thread selection strategy refers to a strategy for selecting an optimal thread for tasks whose task execution type is the serial execution.

Specifically, in this embodiment, after the electronic device determines that the task execution type is the serial execution, the threads in the first resource pool are determined as the first candidate threads of this task; it is firstly judged that whether there is a task associated with the to-be-processed task in the task queues of the threads in the first resource pool; if so, the thread corresponding to the task associated with the to-be-processed task is taken as the optimal thread for executing this task, and the task is allocated to the task queue of the optimal thread; and if not, according to the first thread selection strategy, the thread with the minimum computing power required by included tasks is found from the first candidate threads as the optimal thread for executing this task, and the task is allocated to the task queue of the optimal thread.

Step 2022: in response to the task execution type corresponding to any task being the parallel execution, determining threads in the second resource pool as second candidate threads corresponding to this task, and determining a corresponding thread for executing this task from the second candidate threads according to a second thread selection strategy.

The second candidate threads refer to candidate threads in the second resource pool for processing tasks whose task execution type is the parallel execution.

The second thread selection strategy refers to a strategy for selecting an optimal thread for tasks whose task execution type is the parallel execution.

Specifically, in this embodiment, after the electronic device determines that the task execution type is the parallel execution, the threads in the second resource pool are determined as the second candidate threads of this task, and then according to the second thread selection strategy, a thread with the minimum computing power required by included tasks is found from the second candidate threads as the optimal thread for executing this task, and the task is allocated to the task queue of the optimal thread.

In the in-process resource control method provided by this embodiment, the determining corresponding threads for executing respective tasks according to the respective task attribute information includes: in response to the task execution type corresponding to any task being the serial execution, determining the threads in the first resource pool as the first candidate threads corresponding to this task, and determining the corresponding thread for executing this task from the first candidate threads according to the first thread selection strategy; and in response to the task execution type corresponding to any task being the parallel execution, determining the threads in the second resource pool as the second candidate threads corresponding to this task, and determining the corresponding thread for executing this task from the second candidate threads according to the second thread selection strategy. By judging the task execution type and allocating tasks to different resource pools according to the task type, the serial tasks and parallel tasks can be separated, thereby avoiding a problem of failed task execution caused by sequence disorder during task execution, and ensuring an accuracy of the task execution. Meanwhile, the optimal thread for executing tasks can be determined according to the first thread selection strategy and the second thread selection strategy, thereby accurately selecting the optimal processing resource for the to-be-processed tasks according to different thread selection strategies based on different task execution types, ensuring that the tasks can be processed as soon as possible and improving task execution efficiency.

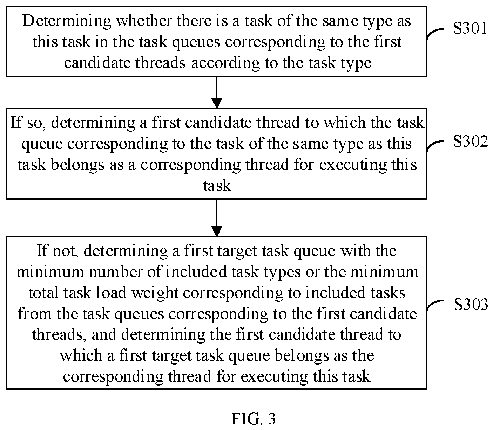

FIG. 3 is a flowchart of an in-process resource control method provided by another embodiment of the present application. As shown in FIG. 3, as an optional implementation, in this embodiment, task attribute information further includes a task type and a task load weight.

Correspondingly, step 2021 includes the following steps.

Step 301: determining whether there is a task of the same type as this task in the task queues corresponding to the first candidate threads according to the task type.

The task of the same type as this task refers to a task associated with this task.

Specifically, in this embodiment, the electronic device acquires tasks and task attribute information, where the task attribute information includes a task execution type, the task type and the task load weight. The electronic device stores the tasks, the task execution type, the task type, the task load weight and other information in a newly created table. Specifically, in the table, there is task attribute information corresponding to the tasks in the task queues corresponding to respective threads. If the task execution type is the serial execution, the electronic device compares, based on the task and the task type information in the table, whether there is a task associated with the to-be-processed task in the task queues of the threads in the first resource pool.

Step 302: if so, determining a first candidate thread to which the task queue corresponding to the task of the same type as this task belongs as a corresponding thread for executing this task.

Specifically, in this embodiment, when there is a task associated with the to-be-processed task in the task queues of the threads in the first resource pool, the to-be-processed task is allocated to the task queue of the first candidate thread to which the task queue corresponding to the task associated with this task belongs, and this task is processed by the first candidate thread to which the task queue corresponding to the task associated with this task belongs.

Step 303: if not, determining a first target task queue with the minimum number of included task types or the minimum total task load weight corresponding to included tasks from the task queues corresponding to the first candidate threads, and determining a first candidate thread to which the first target task queue belongs as the corresponding thread for executing this task.

The task load weight is a weight used to represent the computing power required for executing a task. Specifically, the larger the weight value, the greater the required computing power.

The first target task queue refers to an optimal task queue for caching the to-be-processed tasks whose task execution types are the serial execution.

Specifically, in this embodiment, the electronic device acquires tasks and task attribute information, where the task attribute information includes the task execution type, the task type and the task load weight. The electronic device stores the tasks, the task execution type, the task type, task load weight and other information in the newly created table. If there is no task associated with the to-be-processed task in the task queues of the threads in the first resource pool, the electronic device separately calculates, based on information in the table, the number of included task types or the total task load weight corresponding to included tasks in the task queues corresponding to respective threads in the first candidate threads, and sorts the calculated number of included task types or the total task load weight corresponding to included tasks in the task queues corresponding to respective threads in the first candidate threads in ascending order, thereby determining, according to the first thread selection strategy, the first target task queue with the minimum number of included task types or the minimum total task load weight corresponding to included tasks from the task queues corresponding to the first candidate threads, allocating the task to the first target task queue with the minimum number of included task types or the minimum total task load weight corresponding to included tasks, and executing the thread corresponding to this task by the first candidate thread to which the first target task queue belongs.

In the in-process resource control method provided by this embodiment, the task attribute information further includes the task type and the task load weight. Correspondingly, when determining the corresponding thread for executing this task from the first candidate threads according to the first thread selection strategy, it is determined that whether there is a task of the same type as this task in the task queues corresponding to the first candidate threads according to the task type; if so, the first candidate thread to which the task queue corresponding to the task of the same type as this task belongs is determined as the corresponding thread for executing this task; and if not, the first target task queue with the minimum number of included task types or the minimum total task load weight corresponding to included tasks is determined from the task queues corresponding to the first candidate threads, and the first candidate thread to which the first target task queue belongs is determined as the corresponding thread for executing this task. It is judged that whether there is a task associated with the to-be-processed task in the task queues of the threads in the first resource pool. If so, the first candidate thread, to which the task queue corresponding to this task associated with the to-be-processed task belongs, is determined as the corresponding thread for executing the task, which ensures that associated tasks are processed by the same thread, so that the tasks can be executed in a certain order, preventing disorder of task execution order and ensuring the accuracy of task execution. If not, the number of task types or the total task load weight of included tasks is separately calculated in the task queues corresponding to respective threads in the first candidate threads, and according to the first thread selection strategy, the first target task queue with the minimum number of included task types or the minimum total task load weight corresponding to included tasks is determined from the task queues corresponding to the first candidate threads. Since the tasks included in the first target task queue require the minimum computing power and the shortest processing time, a wait time for processing that required by this task is the shortest, thus the first candidate thread to which the first target task queue belongs is the optimal thread for executing this task, thereby selecting the optimal processing resource for the to-be-processed task, ensuring that the task can be processed as soon as possible and improving the task execution efficiency.

As an optional implementation, in this embodiment, step 2022 includes the following steps.

Step 401: determining a second target task queue with the minimum number of included to-be-executed tasks or the minimum total task load weight corresponding to included tasks from the task queues corresponding to respective second candidate threads.

The second target task queue refers to an optimal task queue for caching to-be-processed tasks whose task execution type is the parallel execution.

Specifically, in this embodiment, the electronic device acquires tasks and task attribute information, where the task attribute information includes the task execution type, the task type and the task load weight. The electronic device stores the tasks, the task execution type, the task type, the task load weight and other information in a newly created table. The electronic device separately calculates, based on the information in the table, the number of included to-be-processed tasks or the total task load weight corresponding to included tasks in the task queues corresponding to respective threads in the second candidate threads, and sorts the calculated number of included to-be-processed tasks or the calculated total task load weight corresponding to included tasks in the task queues corresponding to respective threads in the second candidate threads in an ascending order, thereby determining, according to the second thread selection strategy, the second target task queue with the minimum number of included to-be-executed tasks or the minimum total task load weight corresponding to included tasks from the task queues corresponding to the second candidate threads.

Step 402: determining the second candidate thread to which the second target task queue belongs as the corresponding thread for executing this task.

Specifically, in this embodiment, after determining the second target task queue with the minimum number of included to-be-executed tasks or the minimum total task load weight corresponding to included tasks, the task is allocated to the second target task queue with the minimum number of included to-be-executed tasks or the minimum total task load weight corresponding to included tasks, and the thread corresponding to this task is executed by the second candidate thread to which the second target task queue belongs.

In the in-process resource control method provided by this embodiment, when determining a corresponding thread for executing this task from the second candidate threads according to the second thread selection strategy, the second target task queue with the minimum number of included to-be-executed tasks or the minimum total task load weight corresponding to included tasks is determined from the task queues corresponding to respective second candidate thread; and the second candidate thread to which the second target task queue belongs is determined as the corresponding thread for executing this task. As the electronic device separately calculates, based on the task load weights configured by the user, the number of to-be-processed tasks or the total task load weight corresponding to tasks in the task queues corresponding to the second candidate threads, the second target task queue with the minimum number of included to-be-executed tasks or the minimum total task load weight corresponding to included tasks from the task queues corresponding to the second candidate threads is determined according to the second thread selection strategy; and since the tasks included in the second target task queue require the minimum computing power and the shortest processing time, a time waiting for processing that required by this task is the shortest, thus the second candidate thread to which the second target task queue belongs is the optimal thread for executing this task, thereby selecting the optimal processing resource for the to-be-processed task, ensuring that the task can be processed as soon as possible and improving the task execution efficiency.

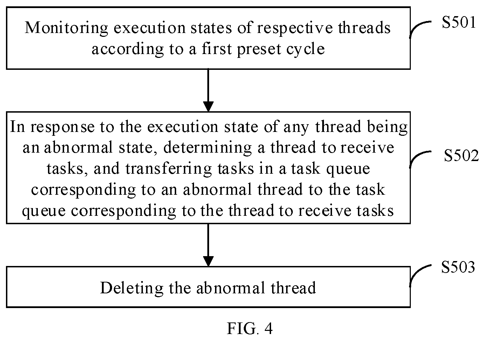

FIG. 4 is a flowchart of an in-process resource control method provided by yet another embodiment of the present application. As shown in FIG. 4, as an optional implementation, in this embodiment, the in-process resource control method further includes the following steps.

Step 501: monitoring execution states of respective threads according to a first preset cycle.

The first preset cycle is a cycle for monitoring the execution states of respective threads, which may be 2s, 3s or other time, and is not specifically limited herein.

Specifically, optionally, in this embodiment, the execution states of respective threads in two resource pools can be monitored by a health management thread according to the first preset cycle, and the health management thread determines whether the execution states of respective threads are abnormal by judging whether respective threads in the two resource pools send heartbeat information periodically.

Step 502: in response to the execution state of any thread being an abnormal state, determining a thread to receive tasks, and transferring tasks in a task queue corresponding to an abnormal thread to the task queue corresponding to the thread to receive tasks.

The abnormal thread refers to a thread that cannot run normally.

Specifically, in this embodiment, since the number of threads in the resource management module is pre-configured, the resource management module sends the number of threads and respective thread identifiers in the first resource pool and the second resource pool to the health management thread at first, and then respective threads in the two resource pools send the heartbeat information to the health management thread periodically. If the health management thread does not receive the same number of heartbeat information as the number of threads in the first resource pool and the second resource pool, it is considered that the thread that does not send the heartbeat information is in the abnormal state. The thread that does not send the heartbeat information is found by comparing a thread identifier in the received heartbeat information with respective thread identifiers sent by the resource management module to the health management thread, and the tasks in the task queue corresponding to the abnormal thread are transferred to the task queue corresponding to the thread to receive tasks. If the task execution type in the task queue corresponding to the abnormal thread is the serial execution, the electronic device separately calculates the number of included task types or the total task load weight corresponding to included tasks in the task queues corresponding to the first candidate threads, determines, according to the first thread selection strategy, the first target task queue with the minimum number of included task types or the minimum total task load weight corresponding to included tasks from the task queues corresponding to the first candidate threads, and transfers the tasks to the first target task queue with the minimum number of included task types or the minimum total task load weight corresponding to included tasks, then the thread corresponding to this task is executed by the first candidate thread to which the first target task queue belongs. If the task execution type in the task queue corresponding to the abnormal thread is the parallel execution, the electronic device separately calculates the number of to-be-processed tasks or the total task load weight corresponding to tasks in the task queues corresponding to the second candidate threads, determines, according to the second thread selection strategy, the second target task queue with the minimum number of included to-be-executed tasks or the minimum total task load weight corresponding to included tasks from the task queues corresponding to the second candidate threads, and transfers the tasks to the second target task queue with the minimum number of included to-be-executed tasks or the minimum total task load weight corresponding to included tasks, then the thread corresponding to this task is executed by the second candidate thread to which the second target task queue belongs.

Step 503: deleting the abnormal thread.

Specifically, in this embodiment, after transferring the tasks in the task queue corresponding to the abnormal thread to the task queue corresponding to the thread to receive tasks, the health management thread deletes the abnormal thread. That is, the abnormal thread is canceled.

The in-process resource control method provided by this embodiment further includes: monitoring the execution states of respective threads according to a first preset cycle; in response to the execution state of any thread being an abnormal state, determining a thread to receive tasks, and transferring the tasks in the task queue corresponding to the abnormal thread to the task queue corresponding to the thread to receive tasks; and deleting the abnormal thread. Through periodically monitoring health states of respective threads in the two resource pools by the health management thread, the abnormal threads can be found in time, and the tasks in the task queue corresponding to the abnormal thread are transferred to the task queue corresponding to the thread to receive tasks, preventing the tasks from being unable to be processed in time due to the tasks being in the task queue corresponding to the abnormal thread for a long time and thus failing to be executed in time.

As an optional implementation, in this embodiment, step 501 includes the following steps.

Step 601: receiving heartbeat information sent by respective threads according to a second preset cycle, where the heartbeat information includes a thread identifier.

The second preset cycle is a cycle for receiving the heartbeat information of respective threads, which may be 1s or other time, and is not specifically limited herein.

The heartbeat information includes the thread identifier and a task execution type.

The thread identifier refers to an ID of a thread, and the IDs of respective threads are globally unique.

Illustratively, in this embodiment, respective threads in the two resource pools send one piece of heartbeat information to the health management thread every 1s, so the health management thread can receive the heartbeat information sent by respective threads every 1s.

Step 602: in response to determining, according to the thread identifier, that the heartbeat information sent by any thread is received within the first preset cycle, determining that the execution state of the thread is normal.

Specifically, in this embodiment, the health management thread receives the heartbeat information sent by any thread in the two resource pools according to the second preset cycle, and determines, according to the thread identifier in the heartbeat information, that the execution state of the thread sending the heartbeat information is normal within the first preset cycle.

Step 603: in response to determining, according to the thread identifier, that the heartbeat information sent by any thread is not received within the first preset cycle, determining that the execution state of the thread is abnormal.

Specifically, in this embodiment, when the health management thread does not receive the heartbeat information sent by any thread in the two resource pools within the second preset cycle, according to the first preset cycle, the health management thread compares the thread identifier in the received heartbeat information with respective thread identifiers sent by the resource management module to the health management thread, to find the thread that does not send the heartbeat information and determines that the execution state of the thread is abnormal.

In the in-process resource control method provided by this embodiment, when monitoring the execution states of respective threads according to the first preset cycle, the heartbeat information sent by respective threads is received according to the second preset cycle, where the heartbeat information includes the thread identifier; in response to determining, according to the thread identifier, that the heartbeat information sent by any thread is received within the first preset cycle, the execution state of this thread is determined as normal; and in response to determining, according to the thread identifier, that the heartbeat information sent by any thread is not received within the first preset cycle, the execution state of this thread is determined as abnormal. Whether respective threads are abnormal can be determined according to whether respective thread send the heartbeat information, and the specific thread with an abnormal execution state can be further determined according to the thread identifier in the heartbeat information at the same time, facilitating further processing of the abnormal thread.

As an optional implementation, in this embodiment, the in-process resource control method further includes the following steps.

Step 701: determining the number of threads in a corresponding resource pool according to a third preset cycle.

The third preset cycle is a cycle for monitoring the number of respective threads, which may be 2s or 3s, and is not specifically limited herein.

Specifically, in this embodiment, since the number of threads in the two resource pools is pre-configured, the two resource pools send the number of threads in the first resource pool and the second resource pool to the health management thread at first, and respective threads in the two resource pools send the heartbeat information to the health management thread according to the second preset cycle, thus the health management thread determines the number of threads sending the heartbeat information once according to a third preset cycle.

Step 702: in response to the number of threads being less than a pre-configured number of threads, creating a new thread in the corresponding resource pool, to enable the total number of threads in the corresponding resource pool after creating the thread to be equal to the pre-configured number of threads.

The pre-configured number of threads is pre-configured by a user, and the resource pool can create a corresponding number of threads according to the number of threads pre-configured by the user.

Specifically, in this embodiment, the health management thread determines the number of threads sending the heartbeat information every 2s. If the number of first candidate threads is less than the pre-configured number of threads, an add resource interface of the resource management module is called to create a new thread in the first resource pool, enabling the total number of threads in the first resource pool after creating the thread to be equal to the pre-configured number of threads. If the number of second candidate threads is less than the pre-configured number of threads, the add resource interface of the resource management module is called to create a new thread in the second resource pool, enabling the total number of threads in the second resource pool after creating the thread to be equal to the pre-configured number of threads.

The in-process resource control method provided by this embodiment further includes: determining the number of threads in the corresponding resource pool according to the third preset cycle; and in response to the number of threads being less than the pre-configured number of threads, creating a new thread in the corresponding resource pool, to enable the total number of threads in the corresponding resource pool after creating the thread to be equal to the pre-configured number of threads. By monitoring the number of threads in the corresponding resource pool according to the third preset cycle, the resource management module is called to create a new thread as soon as it is found that the number of threads is less than the pre-configured number of threads, which prevents that the number of threads does not match a load of to-be-processed tasks, resulting in overload of normal threads; and by creating the new thread, the total number of threads in the corresponding resource pool after creating the thread is enabled to be equal to the pre-configured number of threads, realizing control of the number of threads; and the tasks can be processed in time at the same time, preventing reduction of task execution efficiency.

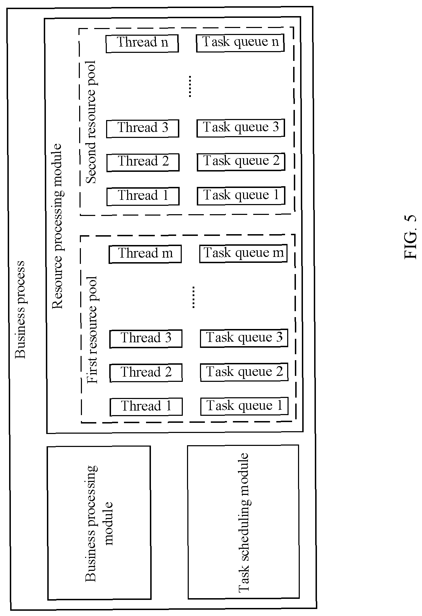

FIG. 5 is a schematic diagram of a business process structure framework provided by an embodiment of the present application. As shown in FIG. 5, the business process structure framework provided by the present application is located in an electronic device, and the business process structure framework includes a business processing module, a task scheduling module and a resource management module.

The business processing module is configured to receive tasks, task attribute information and the number of threads in a first resource pool and a second resource pool sent by a user, and send the tasks, the task attribute information and the number of threads in the first resource pool and the second resource pool to the task scheduling module.

The task scheduling module is configured to receive the tasks, the task attribute information and the number of threads in the first resource pool and the second resource pool sent by the task scheduling module, and calculate current workloads of respective threads according to a first thread selection strategy or a second thread selection strategy. The task scheduling module includes a health management thread, where the health management thread is configured to monitor health states of respective thread in the resource management module. If an abnormal state of one thread is monitored, tasks of this thread are transferred to other threads. If the number of threads is monitored to be less than the pre-configured number of threads, the resource management module is called to create a new thread.

The resource management module is configured to create threads and send the number of threads to the health management thread of the task scheduling module.

The first resource pool is configured to process tasks whose task execution type is serial execution.

The second resource pool is configured to process tasks whose task execution type is parallel execution.

The thread is configured to process tasks.

A task queue is configured to cache to-be-processed tasks.

The in-process resource control method corresponding to FIG. 5 includes the following steps:
Step 801: acquiring at least one to-be-processed task and respective task attribute information, where the task attribute information includes a task execution type, and the task execution type is serial execution or parallel execution;
Step 802: in response to the task execution type corresponding to any task being the serial execution, determining threads in the first resource pool as first candidate threads corresponding to the task, and determining a corresponding thread for executing this task from the first candidate threads according to a first thread selection strategy;
Step 803: determining whether there is a task of the same type as this task in task queues corresponding to the first candidate threads according to a task type;
Step 804: if so, determining a first candidate thread to which a task queue corresponding to the task of the same type as this task belongs as the corresponding thread for executing this task;
Step 805: if not, determining a first target task queue with the minimum number of included task types or the minimum total task load weight corresponding to included tasks from the task queues corresponding to the first candidate threads, and determining a first candidate thread to which the first target task queue belongs as the corresponding thread for executing this task;
Step 806: in response to the task execution type corresponding to any task being the parallel execution, determining threads in the second resource pool as second candidate threads corresponding to this task, and determining a corresponding thread for executing this task from the second candidate threads according to a second thread selection strategy;
Step 807: determining a second target task queue with the minimum number of included to-be-executed tasks or the minimum total task load weight corresponding to included tasks from the task queues corresponding to respective second candidate threads;
Step 808: determining a second candidate thread to which the second target task queue belongs as the corresponding thread for executing this task;
Step 809: allocating the respective tasks to task queues of the corresponding threads;
Step 810: adopting corresponding threads to sequentially execute tasks in the corresponding task queues;
Step 811: receive heartbeat information sent by the respective threads according to a second preset cycle, where the heartbeat information includes a thread identifier;
Step 812: in response to determining, according to the thread identifier, that the heartbeat information sent by any thread is received within the first preset cycle, determining that the execution state of this thread is normal;
Step 813: in response to determining, according to the thread identifier, that the heartbeat information sent by any thread is not received within the first preset cycle, determining that the execution state of this thread is abnormal;
Step 814: in response to an execution state of any thread being an abnormal state, determining a thread to receive tasks, and transferring tasks in a task queue corresponding to an abnormal thread to a task queue corresponding to the thread to receive tasks;
Step 815: deleting the abnormal thread;
Step 816: determining the number of threads in a corresponding resource pool according to a third preset cycle;
Step 817: in response to the number of threads being less than a pre-configured number of threads, creating a new thread in a corresponding resource pool, to enable the total number of threads in the corresponding resource pool after creating the thread to be equal to the pre-configured number of threads.

It should be noted that the execution of these steps is not strictly limited in order, and these steps can be executed in other orders.

The implementation of the in-process resource control method provided by this embodiment is similar to the implementation of the corresponding steps in the above embodiments, and will not be repeated here one by one.

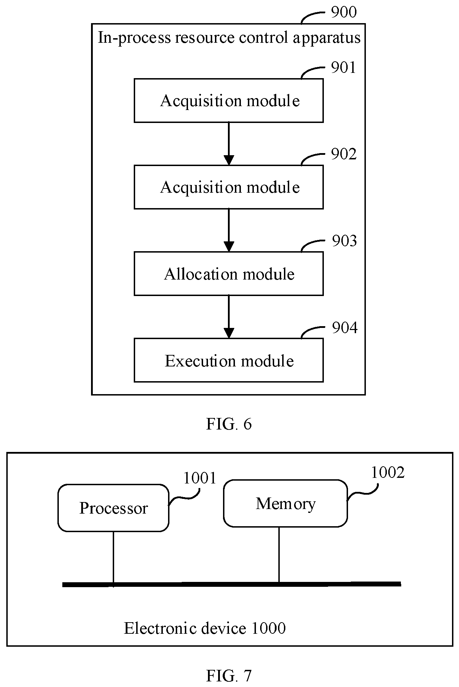

FIG. 6 is a schematic structural diagram of an in-process resource control apparatus provided by an embodiment of the present application. As shown in FIG. 6, the in-process resource control apparatus provided in this embodiment is located in an electronic device, and the in-process resource control apparatus 900 provided in this embodiment includes an acquisition module 901, a determination module 902, an allocation module 903 and an execution module 904.

The acquisition module 901 is configured to acquire at least one to-be-processed task and respective task attribute information, where the task attribute information includes a task execution type, and the task execution type is serial execution or parallel execution. The determination module 902 is configured to determine corresponding threads for executing respective tasks according to the respective task attribute information, where a thread is created by a process and located in a first resource pool or a second resource pool, the first resource pool is a resource pool for threads corresponding to serial processing tasks, the second resource pool is a resource pool for threads corresponding to parallel processing tasks, and the number of threads in the first resource pool and the second resource pool is pre-configured. The allocation module 903 is configured to allocate the respective tasks to task queues of the corresponding threads. The execution module 904 is configured to adopt corresponding threads to sequentially execute tasks in corresponding task queues.

The in-process resource control apparatus provided by this embodiment can execute the method embodiment shown in FIG. 2, and their specific implementation principles and technical effects are similar, which will not be repeated here.

Optionally, when determining the corresponding thread for executing the respective tasks according to the respective task attribute information, the determination module 902 is specifically configured to: in response to the task execution type corresponding to any task being the serial execution, determine threads in the first resource pool as first candidate threads corresponding to this task, and determine the corresponding thread for executing this task from the first candidate threads according to a first thread selection strategy; and in response to the task execution type corresponding to any task being the parallel execution, determine threads in the second resource pool as second candidate threads corresponding to this task, and determine a corresponding thread for executing this task from the second candidate threads according to a second thread selection strategy.

Optionally, the task attribute information further includes a task type and a task load weight.

Correspondingly, when determining the corresponding thread for executing this task from the first candidate threads according to the first thread selection strategy, the determination module 902 is specifically configured to: determine whether there is a task of the same type as this task in the task queues corresponding to the first candidate threads according to the task type; if so, determine a first candidate thread to which a task queue corresponding to the task of the same type as this task belongs as the corresponding thread for executing this task; and if not, determine a first target task queue with the minimum number of included task types or the minimum total task load weight corresponding to included tasks from the task queues corresponding to the first candidate threads, and determine a first candidate thread to which the first target task queue belongs as the corresponding thread for executing this task.

Optionally, when determining the corresponding thread for executing this task from the second candidate threads according to the second thread selection strategy, the determination module 902 is specifically configured to: determine a second target task queue with the minimum number of included to-be-executed tasks or the minimum total task load weight corresponding to included tasks from the task queues corresponding to respective second candidate threads; and determine a second candidate thread to which the second target task queue belongs as the corresponding thread for executing this task.

Optionally, the in-process resource control apparatus provided in this embodiment further includes a monitoring module and a deletion module.

The monitoring module is configured to monitor the execution states of respective threads according to a first preset cycle. The determination module 902 is further configured to, in response to an execution state of any thread being an abnormal state, determine a thread to receive tasks, and transfer tasks in a task queue corresponding to an abnormal thread to a task queue corresponding to the thread to receive tasks. The deletion module is configured to delete the abnormal thread.

Optionally, when monitoring the execution states of the respective threads according to the first preset cycle, the monitoring module is specifically configured to: receive heartbeat information sent by the respective threads according to a second preset cycle, where the heartbeat information includes a thread identifier; in response to determining, according to the thread identifier, that the heartbeat information sent by any thread is received within the first preset cycle, determine that the execution state of the thread is normal; and in response to determining, according to the thread identifier, that the heartbeat information sent by any thread is not received within the first preset cycle, determine that the execution state of the thread is abnormal.

Optionally, the in-process resource control apparatus provided in this embodiment further includes a creation module.

The determination module 902 is further configured to determine the number of threads in a corresponding resource pool according to a third preset cycle. The creation module is configured to, in response to the number of threads being less than a pre-configured number of threads, create a new thread in a corresponding resource pool, and enable the total number of threads in the corresponding resource pool after creating the thread to be equal to the pre-configured number of threads.

The in-process resource control apparatus provided by this embodiment can execute the method embodiments shown in FIGs. 3 to 4, and their specific implementation principles and technical effects are similar, which will not be repeated here.

FIG. 7 is a schematic structural diagram of an electronic device provided by an embodiment of the present application. As shown in FIG. 7, the electronic device 1000 provided in this embodiment includes a processor 1001 and a memory 1002 connected to the processor in a communication way.

The memory 1002 stores computer-executable instructions. The processor 1001 executes the computer-executable instructions stored in the memory 1002 to implement the in-process resource control method provided by any one of the above embodiments. For relevant explanations, reference may be made to the relevant descriptions and effects corresponding to steps in the accompanying drawings, which will not be repeated here in detail.

The program may include program codes, and the program codes include computer-executable instructions. The memory 1002 may include a high-speed RAM memory, and may also include a non-volatile memory (non-volatile memory), such as at least one disk memory.

In this embodiment, the memory 1002 is connected to the processor 1001 through a bus. The bus may be an industry standard architecture (Industry Standard Architecture, short for ISA) bus, a peripheral component interconnect (Peripheral Component Interconnect, short for PCI) bus, an extended industry standard architecture (Extended Industry Standard Architecture, short for EISA) bus, or the like. The bus may be divided into an address bus, a data bus, a control bus, and the like. For ease of representation, only one thick line is used in FIG. 7, but it does not mean that there is only one bus or one type of bus.

An embodiment of the present application further provides a computer-readable storage medium, where the computer-readable storage medium stores computer-executable instructions, and the computer-executable instructions, when executed by a processor, are configured to implement the in-process resource control method provided by any one of the above embodiments. For example, the computer-readable storage medium may be a ROM, a random access memory (RAM), a CD-ROM, a magnetic tape, a floppy disk, an optical data storage device, and the like.

An embodiment of the present application further provides a vehicle, including the electronic device shown in FIG. 7.

An embodiment of the present application further provides a computer program product, including a computer program which, when executed by a processor, implements the in-process resource control method provided by any one of the above embodiments.

An embodiment of the present application further provides a computer program, including program code. When the computer program is executed by a processor, the program code is used to implement the in-process resource control method provided by any one of the above embodiments.

It should be noted that, for the sake of concise description, the above method embodiments are all expressed as a series of action combinations. However, those skilled in the art should know that the present application is not limited by the described order of actions, the reason is that, according to the present application, some steps can be performed in other orders or simultaneously. Secondly, those skilled in the art should also know that the embodiments described in the specification are all optional embodiments, and the involved actions and modules are not necessarily essential to the present application.

It should be further noted that although respective steps in the flowchart are displayed in sequence according to arrow indications, these steps are not necessarily executed in sequence according to the arrow indication. Unless explicitly stated herein, the execution of these steps has no strict order limitation, and these steps can be executed in other orders. Moreover, at least part of the steps in the flowchart may include multiple sub-steps or multiple stages. These sub-steps or stages are not necessarily executed at the same time, but can be executed at different times. The execution orders of these sub-steps or stages are not necessarily sequential, but may be executed in turn or alternately with at least some of the other steps or the sub-steps/phases of other steps.

It should be understood that the above apparatus embodiments are only illustrative, and the apparatus of the present application can also be implemented in other ways. For example, divisions of units/modules in the above embodiments are only logical function divisions, and there may be other division methods in actual implementation. For example, multiple units, modules, or components can be combined, or integrated into another system, or some features can be ignored or not implemented.

In addition, unless otherwise specified, respective functional units/modules in respective embodiments of the present application can be integrated into one unit/module, or respective units/modules can exist physically independently, or two or more units/modules can be integrated together. The above-mentioned integrated unit/module can be implemented in the form of hardware, or in the form of software program modules, and the present invention is not limited to any specific form of combination of hardware and software.

When the integrated unit/module is implemented in the form of hardware, the hardware can be a digital circuit, an analog circuit, and the like. A physical implementation of a hardware structure includes but is not limited to transistors, memristors, and the like. Unless otherwise specified, an artificial intelligence processor can be any appropriate hardware processor, such as CPU, GPU, FPGA, DSP, ASIC, and the like. Unless otherwise specified, a storage unit can be any appropriate magnetic storage medium or magneto-optical storage medium, such as a resistive random access memory RRAM (Resistive Random Access Memory), a dynamic random access memory DRAM (Dynamic Random Access Memory), a static random-access memory SRAM (Static Random-Access Memory), an enhanced dynamic random access memory EDRAM (Enhanced Dynamic Random Access Memory), a high-bandwidth memory HBM (High-Bandwidth Memory), a hybrid memory cube HMC (Hybrid Memory Cube), and the like.

When the integrated unit/module is implemented in the form of a software program module and sold or used as an independent product, it can be stored in a computer-readable memory. Based on such understanding, the technical solution of the present application essentially or the part that contributes to the prior art or all or part of the technical solution can be embodied in the form of a software product. The computer software product is stored in a memory and includes several instructions to enable a computer device (which can be a personal computer, a server, or a network device, and the like) to execute all or part of the steps of the methods in each embodiment of the present application. The above-mentioned memory includes: various media that can store program codes, such as a U disk, a read-only memory (ROM, Read-Only Memory), a random access memory (RAM, Random Access Memory), a mobile hard disk, a magnetic disk, or an optical disk.

In the above embodiments, the description of respective embodiments have their own focus. For the part not described in detail in a certain embodiment, reference can be made to the relevant descriptions of other embodiments. Technical features of the above embodiments can be combined arbitrarily. To make the description concise, not all possible combinations of the technical features in the above embodiments are described. However, as long as there is no contradiction in the combination of these technical features, they should be considered as the scope recorded in this specification.

After considering the specification and practicing the invention disclosed herein, those skilled in the art will easily think of other implementations of the present application. The present application is intended to cover any modifications, uses, or adaptive changes of the present application. These modifications, uses, or adaptive changes follow the general principles of the present application and include common knowledge or conventional technical means in the technical field not disclosed in the present application. The specification and embodiments are only regarded as exemplary, and true scope and spirit of the present application are pointed out by the following claims.

It should be understood that the present application is not limited to a precise structure that has been described above and shown in the accompanying drawings, and various modifications and changes can be made without departing from its scope. The scope of the present application is only limited by the appended claims.

## Claims

1. An in-process resource control method, comprising:
acquiring at least one to-be-processed task and respective task attribute information, wherein the task attribute information comprises a task execution type, and the task execution type is serial execution or parallel execution;
determining corresponding threads for executing respective tasks according to the respective task attribute information, wherein the thread is created by a process and located in a first resource pool or a second resource pool, the first resource pool is a resource pool for threads corresponding to serial processing tasks, the second resource pool is a resource pool for threads corresponding to parallel processing tasks, and the number of threads in the first resource pool and the second resource pool is pre-configured;
allocating the respective tasks to task queues of the corresponding threads;
adopting corresponding threads to sequentially execute tasks in corresponding task queues.

2. The method according to claim 1, wherein the determining the corresponding threads for executing the respective tasks according to the respective task attribute information comprises:
in response to the task execution type corresponding to any task being the serial execution, determining threads in the first resource pool as first candidate threads corresponding to the task, and determining a corresponding thread for executing the task from the first candidate threads according to a first thread selection strategy;
in response to the task execution type corresponding to any task being the parallel execution, determining threads in the second resource pool as second candidate threads corresponding to the task, and determining a corresponding thread for executing the task from the second candidate threads according to a second thread selection strategy.

3. The method according to claim 2, wherein the task attribute information further comprises a task type and a task load weight;
the determining the corresponding thread for executing the task from the first candidate threads according to the first thread selection strategy comprises:
determining whether there is a task of the same type as the task in task queues corresponding to the first candidate threads according to the task type;
if so, determining a first candidate thread to which a task queue corresponding to the task of the same type as the task belongs as the corresponding thread for executing the task;
if not, determining a first target task queue with the minimum number of comprised task types or the minimum total task load weight corresponding to comprised tasks from the task queues corresponding to the first candidate threads, and determining a first candidate thread to which the first target task queue belongs as the corresponding thread for executing the task.

4. The method according to claim 2 or 3, wherein the determining the corresponding thread for executing the task from the second candidate threads according to the second thread selection strategy comprises:
determining a second target task queue with the minimum number of comprised to-be-executed tasks or the minimum total task load weight corresponding to comprised tasks from the task queues corresponding to respective second candidate threads;
determining a second candidate thread to which the second target task queue belongs as the corresponding thread for executing the task.

5. The method according to any one of claims 1 to 4, further comprising:
monitoring execution states of respective threads according to a first preset cycle;
in response to an execution state of any thread being an abnormal state, determining a thread to receive tasks, and transferring tasks in a task queue corresponding to an abnormal thread to a task queue corresponding to the thread to receive tasks;
deleting the abnormal thread.

6. The method according to claim 5, wherein the monitoring the execution states of the respective threads according to the first preset cycle comprises:
receiving heartbeat information sent by the respective threads according to a second preset cycle, wherein the heartbeat information comprises a thread identifier;
in response to determining, according to the thread identifier, that the heartbeat information sent by any thread is received within the first preset cycle, determining that the execution state of the thread is normal;
in response to determining, according to the thread identifier, that the heartbeat information sent by any thread is not received within the first preset cycle, determining that the execution state of the thread is abnormal.

7. The method according to any one of claims 1 to 6, further comprising:
determining the number of threads in a corresponding resource pool according to a third preset cycle;
in response to the number of threads being less than a pre-configured number of threads, creating a new thread in a corresponding resource pool, to enable the total number of threads in the corresponding resource pool after creating the thread to be equal to the pre-configured number of threads.

8. An in-process resource control apparatus, comprising:
an acquisition module, configured to acquire at least one to-be-processed task and respective task attribute information, wherein the task attribute information comprises a task execution type, and the task execution type is serial execution or parallel execution;
a determination module, configured to determine corresponding threads for executing respective tasks according to the respective task attribute information, wherein the thread is created by a process and located in a first resource pool or a second resource pool, the first resource pool is a resource pool for threads corresponding to serial processing tasks, the second resource pool is a resource pool for threads corresponding to parallel processing tasks, and the number of threads in the first resource pool and the second resource pool is pre-configured;
an allocation module, configured to allocate the respective tasks to task queues of the corresponding threads;
an execution module, configured to adopt corresponding threads to sequentially execute tasks in corresponding task queues.

9. An electronic device, comprising a processor and a memory connected to the processor in a communication way;
the memory stores computer-executable instructions;
the processor executes the computer-executable instructions stored in the memory to implement the method according to any one of claims 1 to 7.

10. A computer-readable storage medium, wherein the computer-readable storage medium stores computer-executable instructions which, when executed by a processor, implement the method according to any one of claims 1 to 7.

11. A vehicle, comprising the electronic device according to claim 9.

12. A computer program product, comprising a computer program which, when executed by a processor, implements the method according to any one of claims 1 to 7.

13. A computer program, comprising program codes, wherein when the computer program is executed by a processor, the program codes are configured to implement the method according to any one of claims 1 to 7.
